# EUROPEAN PATENT SPECIFICATION

(11) **EP 1 281 260 B1**
(45) Date of publication and mention of the grant of the patent: **21.03.2007**
(21) Application number: 01925696.5
(22) Date of filing: 27.04.2001
(51) Int. Cl.: H04L 12/66, H04L 12/24, H04L 12/56, G06F 9/445

(54) **METHOD AND GATEWAY FOR PERFORMING ONLINE SWITCHING OF SOFTWARE IN A COMMUNICATION SYSTEM**
VERFAHREN UND GATEWAY FÜR DAS ONLINE-AUSTAUSCHEN VON SOFTWARE IN EINEM KOMMUNIKATIONSSYSTEM
PROCEDE ET PASSERELLE PERMETTANT D'EFFECTUER UNE COMMUTATION EN LIGNE D'UN LOGICIEL DANS UN SYSTEME DE COMMUNICATION

(30) Priority: 04.05.2000 GB 0010706
(43) Date of publication of application: 05.02.2003
(73) Proprietor: Ericsson AB, Stockholm (SE)
(72) Inventor: MARTIN, Peter, Nigel, Swanage, Dorset BH19 1HZ (GB); SPARRY, Icarus, San Jose, CA 95123 (US); LINDSAY, William, Andrew, Poole, Dorset BH15 2QT (GB); LANE, Keith, Martin, Canford Heath, Poole, Dorset BH17 9EL (GB); GREEN, Robert, Hugh, Poole, Dorset BH15 4LX (GB)
(74) Representative: Stasiewski, Piotr Grzegorz
(86) International application number: PCT/GB2001/001912
(87) International publication number: WO 2001/084792

(56) References cited:
- EP-A- 0 690 635
- EP-A- 0 959 405
- WO-A-96/18146
- DE-A- 19 843 048
- US-A- 5 155 837
- US-A- 5 754 785
- US-A- 5 987 511
- APEL U: "ON-LINE SOFTWARE EXTENSION AND MODIFICATION" ELECTRICAL COMMUNICATION,ALCATEL. BRUSSELS,BE, vol. 64, no. 4, 1990, pages 327-333, XP000230842 ISSN: 0013-4252
- DECASPER D ET AL: "ROUTER PLUGINS: A SOFTWARE ARCHITECTURE FOR NEXT-GENERATION ROUTERS" IEEE / ACM TRANSACTIONS ON NETWORKING,IEEE INC. NEW YORK,US, vol. 8, no. 1, February 2000 (2000-02), pages 2-15, XP000924285 ISSN: 1063-6692

## Description

The present invention relates to a method of performing online switching of software in a communication system, in particular, but not exclusively, to a method of switching in a communication system including software controlled connection gateways from an earlier software build to a later software build whilst the system is in operation conveying communication traffic; the invention further relates to a communication system and a connection gateway operating according to the method.

Conventional communication systems vary in size and complexity. Larger systems have associated therewith numerous subscribers and are capable of routing data along communication paths connecting the subscribers in response to subscriber demand. The paths are established under software control through units known as connection gateways. Such gateways perform routing functions as well as other functions such as data filtration, data reformatting and data encryption or decryption.

When upgrading software in the conventional systems, connection gateways therein executing current versions of software are interrupted or momentarily powered down and then new versions of software are loaded into them and subsequently executed. Such interruption or powerdown causes interruption of services provided in the systems and potential loss of established communication paths therein. Moreover, such interruption or powerdown can potentially appear as system unreliability to subscribers.

In patent application WO 96 18146 to Ericsson there is described a computer system and method for passing control directly from an old version of software to a new version of software. According to Ericsson, the old software and new software are arranged to operate in parallel i.e. concurrently, the object being to test the new software whilst the old software is handling traffic.

The inventors have appreciated that it is desirable to perform online switching between versions of software in communications systems including connection gateways without causing interruption of established communication paths for communication traffic through the systems.

According to a first aspect of the present invention, there is provided a method of performing online switching of software from executing a first version of operating software to executing a second version of operating software in a communication system, the system incorporating connecting means controllable using the software for routing and processing communication traffic flowing between subscribers connected to the system in response to subscriber demand, the method characterised in that it includes the steps of:
(a) the system with its connecting means executing the first version of the software;
(b) receiving the second version of software at the connecting means;
(c) receiving an instruction at the connecting means to perform an online switch of software;
(d) storing persistent data describing at least routing connections established through the connecting means;
(e) transferring control of the connecting means from the first version of software to interfacing software executing in the connecting means and operable to maintain established routing connections through the connecting means;
(f) executing the second version of software concurrently with the interfacing-software to enable the second version to recover the persistent data and configure itself in response thereto; and
(g) passing control of the connecting means from the interfacing software to the second version of software.

The present invention also provides a communication system (100), the system (100) comprising connecting means (130, 140, 150) and software means for controlling the connecting means for routing and processing communication traffic flowing between subscribers (110, 180) connected to the system (100) in response to subscriber demand, in which the software means comprises a first version of the software characterised in that the system also comprises means for receiving a second version of the software at the connecting means (130) and means for receiving an instruction at the connecting means to perform an online switch of software; means for storing persistent data describing at least routing connections established through the connecting means; interfacing software (MMH) for executing in the connecting means (130) for maintaining established routing connections through the connecting means (130); means for transferring control of the connecting means (130) from the first version of software to interfacing software (MMH); means for executing the second version of software concurrently with the interfacing software (MMH) for enabling the_ second version to recover the persistent data and to configure itself in response thereto; and means for passing control of the connecting means from the interfacing software (MMH) to the second version of software.

The invention provides the advantage that the connecting means is capable of being switched from executing the first version of software to executing the second version of software without causing an interruption of communication traffic conveyed through the connecting means.

The method involves invoking the interfacing software which is advantageously included in the first version of software, the interfacing software operable to control the connecting means without support from other pans of the first version of software. Thus, the interfacing software maintains operation of the connecting means when execution of other parts of the first version of software is terminated.

Persistent data is defined as being data, which includes one or more of:
(a) a record of the state of the connecting means at an instance when the persistent data is stored;
(b) a record of the manner in which the connecting means is included into the system;
(c) licensing data relating to subscribers and users of the system;
(d) a record of all established connections and associated processing functions through the connecting means; and
(e) states of software objects running in the connecting means when the persistent data is stored.

In order to reduce the size and complexity of the persistent data, the first version of software, after step (c) of the method, is operable to render the connecting means unresponsive to new subscriber requests to establish connections through the connecting means between subscribers, thereby enabling the connecting means to attain a stable state with current tasks completed prior to storing the persistent data.

Conveniently, the system includes managing means for downloading the versions of the software to the connecting means and for issuing the instruction in step (c) of the method to perform an online switch of software. Preferably, the managing means is operable to communicate to the connecting means using messages in Ethernet format.

Subscribers often employ incompatible formats for their communication traffic. Thus, beneficially, the connecting means is operable to interface between Ethernet communication traffic and E1 or T1 pulse code modulated (PCM) communication traffic.

In a practical implementation, the connecting means preferably comprises a plurality of connection gateways, each gateway including a host processor and an array of digital signal processors (DSPs), the host processor operable to receive routing instructions and to allocate connection routes through the signal processors to provide communication paths between subscribers. The host processor and the array are advantageously housed on a circuit board in relatively close mutual proximity.

Advantageously, the host processor in each gateway is operable to handle Ethernet communication traffic and the DSPs are operable to handle E1 or T1 format PCM communication traffic, the host processor operable to communicate with the DSPs thereby providing translation of communication traffic between Ethernet format and E1 or T1 PCM format through the gateway. Allocating Ethernet traffic processing to the host processor and PCM processing to the DSPs enables the gateway to cope with high rates of communication traffic in the order of 12000 packets/second on Ethernet.

When performing online switching of software, the interfacing software is advantageously operable in steps (e) and (f) of the method to maintain communication traffic flow through the host processor. The DSPs, on account of their associated software stored therein, function to maintain existing established connections therethrough unless instructed to do otherwise. Thus, the interfacing software is capable of ensuring that established connections through the system are uninterrupted when performing the online switching.

In order to allocate processing load more uniformly in each gateway, the array of each gateway incorporates its DSPs grouped in rows, each row hardwired to a respective PCM communication traffic port of the gateway.

Advantageously, in order to avoid interrupting execution of the first version of software when the second version of software is loaded into each gateway, the host processor is connected to associated memory means, the second version of software in step (c) being loaded into a second part of the memory means so as not to overwrite the first version of software residing in a first part of the memory means.

Likewise, in order to avoid the versions of software stored in each gateway from overwriting the persistent data stored therein, the host processor is connected to associated memory means for storing in a third part thereof the persistent data in step (d), the third part not overwritten when the first and second version of software are loaded into the memory means.

In order to ensure that established connections through the connecting means are uninterrupted when performing online switching of software, software residing in random access memory of the signal processors and controlling operation of the signal processors remains unupdated in steps (c) to (g) of the method.

When the system is switched to operating using the second version of software rendering the first version obsolete, it is desirable that the first and second versions of software are each capable of rendering the connecting means functional in the system when invoked after a power interruption to the system.

In order for the version of software executing in the connecting means to determine whether or not it is an upgrade or not, the connecting means includes basic operating software stored therein in non-volatile memory, the basic operating software operable to set flagging means for enabling the second version of software to determine from the flagging means whether it is invoked after a power supply interruption to the system or is invoked when performing online switching of software in the system. The flagging means determines, for example, whether or not the version of software executing proceeds to load software into the DSPs; such loading of software into the DSPs is not performed when online switching of software occurs otherwise interruption of established connections would occur.

In a second aspect of the present invention, there is provided a communication system operable according to the aforementioned method of the first aspect of the invention.

In a third aspect of the present invention, there is provided a connection gateway operable according to the aforementioned method of the first aspect of the invention.

Embodiments of the invention will now be described, by way of example only, with reference to the following diagrams in which:
Figure 1 is a schematic illustration of a communication system incorporating connection gateways according to the invention;
Figure 2 is a schematic diagram of a connection gateway according to the invention;
Figure 3 is a view of a circuit board layout of the gateway illustrated in Figure 2; and
Figure 4 is a graphical representation of a process executable in the communication system in Figure 1 for switching from a current version of software to a new version of software.

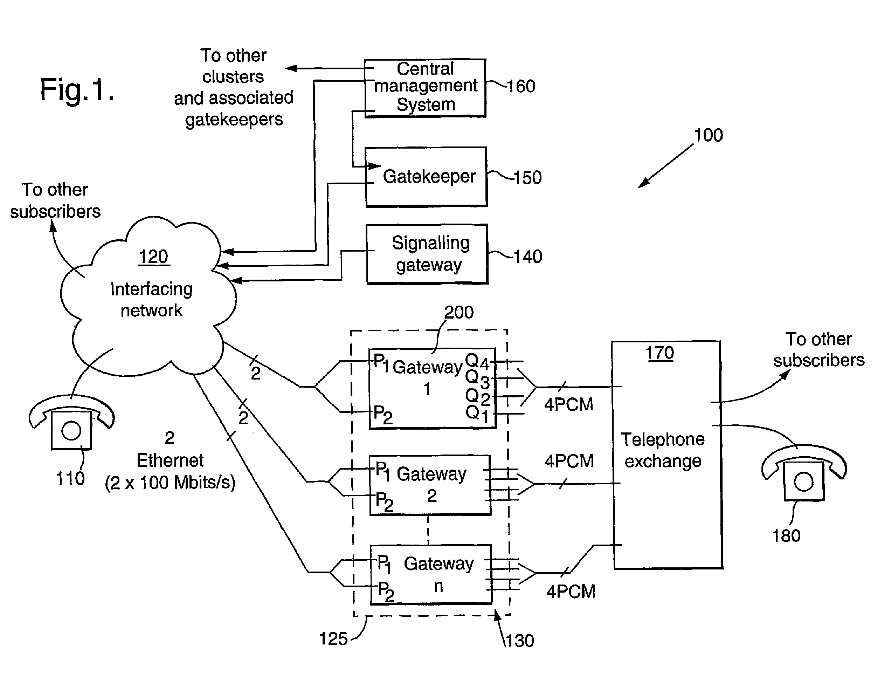

Communication systems can be configured in, potentially, many alternative ways. Figure 1 is an illustration of one possible configuration of a communication system according to the invention, the system indicated generally by 100.

The system 100 comprises a first subscriber 110, an interconnection network 120 functioning under internet protocol (IP), and a cluster of connection gateways according to the invention shown included within a dotted line 125, the cluster being indicated by 130. The gateways in the cluster 130 are mutually identical. Moreover, the system 100 further comprises a telephone exchange 170 and a second subscriber 180.

The network. 120 is connected to the first subscriber 110 and to other similar subscribers (not shown). Likewise, the exchange 170 is connected to the second subscriber 180 and to other similar subscribers (also not shown). The network 120 is connected to the gateways by Ethernet links.

Each connection gateway, for example a gateway 200, comprises two Ethernet ports P₁, P₂ which are each operable to receive or output Ethernet communication traffic at a rate of 100 Mbits/second. The Ethernet ports P₁, P₂ are connected via the network 120 to the management system 160, to the gatekeeper 150, and to the signaling gateway 140. Each gateway further comprises four pulse code modulation (PCM) ports Q₁, Q₂, Q₃, Q₄ which are connected to respective PCM connection ports of the telephone exchange 170.

Each connection gateway in the cluster 130 incorporates an associated Motorola PowerQuiccII processor. Each PowerQuiccII processor is capable of receiving Ethernet instructions via its associated ports P₁, P₂ from the central management system 160 using simple network management protocol (SNMP). Likewise, each PowerQuiccII processor can respond back to the management system 160 via its associated ports P₁, P₂, for example for providing acknowledgements that instructions have been received by the processor.

Moreover, each PowerQuiccII processor is also capable of receiving Ethernet instructions from the gatekeeper 150. The gatekeeper 150 communicates to the processor using media gateway control protocol (MGCP). Likewise, each processor can respond back to the gatekeeper 150 via its associated ports P₁, P₂. Furthermore, the signaling gateway 140 connects call signaling to the gatekeeper 150 to enable call control.

The management system 160 is also connected to other clusters of gateways and their associated signaling gateways and gatekeepers (not shown). The gatekeeper 150 is thus connected to in a range of 300 to 1000 gateways included within the cluster 130, namely a parameter "n" in Figure 1 is in a range of 300 to 1000. The management system 160 thereby is responsible for managing many thousands of connection gateways included in the cluster 130 and the other clusters (not shown).
Operation of the system 100 connecting the subscribers 110, 180 together will now be described with reference to Figure 1. The first subscriber 110 commences by dialing an access number for contacting the second subscriber 180. The access number propagates from the first subscriber 110 to the network 120 which converts the number into Ethernet format and then outputs it as an Ethernet formatted access number at its Ethernet ports towards the gatekeeper 150, On receipt of the Ethernet formatted number, the gatekeeper 150 determines which gateway in the cluster 130 is available for providing a communication path between the network 120 and the exchange 170. The gatekeeper 150 then sends an instruction in Ethernet format to the ports P₁, P₂ of a gateway, for example to the gateway 200, to instruct it to provide a communication path from the network 120 to the exchange 170 for the call. The instructed gateway then establishes, a communication path therethrough. The gatekeeper 150 then communicates the access number to the exchange 170 through the signalling gateway 140 which responds by establishing a communication path from the exchange 170 to the second subscriber 120.

When a complete communication path is established between the s ibscribers 110, 180, the first subscriber 110 commences by sending message data, for example digitally sampled speech, which is received by the network 120 and converted there: n to Ethernet formatted message data. The Ethernet formatted data propagates from the network 120 to the instructed gateway in the cluster 130 at which the message data is converted to corresponding message data in PCM format which is then output tc the exchange 170. The exchange 170 proceeds to transmit the PCM formatted message data to the second subscriber 180.
The second subscriber 180 also outputs return data for transmission to the first subscriber 110. The return data propagates from the second subscriber 180 to the exchange 170 whereat it is translated into return data in PCM format. The PCM formatted return data is then transmitted onwards to a gateway in the cluster 130 instructed by the gatekeeper 150 to provide a communication path for the PCM return data to the network 120. The instructed gateway receives the PCM formatted return data and con verts it to corresponding Ethernet formatted data which is subsequently output by the instructed gateway at its associated P₁, P₂ ports to the network 120. The network 120 Then routes the Ethernet formatted data onwards to the subscriber 110.

The cluster 130 of gateways, the management system 160, the gatekeeper 150 and the signaling gateway 140 are thus effective at providing a flexible interface between the network 120 and the exchange 170 which operate with mutually different communication data formats. Apart from providing communication paths and translating data format, each gateway in the cluster 130 is capable of performing other functions such as filtration, encryption, decryption and error checking. Each gateway is also operable to provide bi-directional communication, namely from its Ethernet ports to its PCM ports and also from its PCM ports to its Ethernet ports.

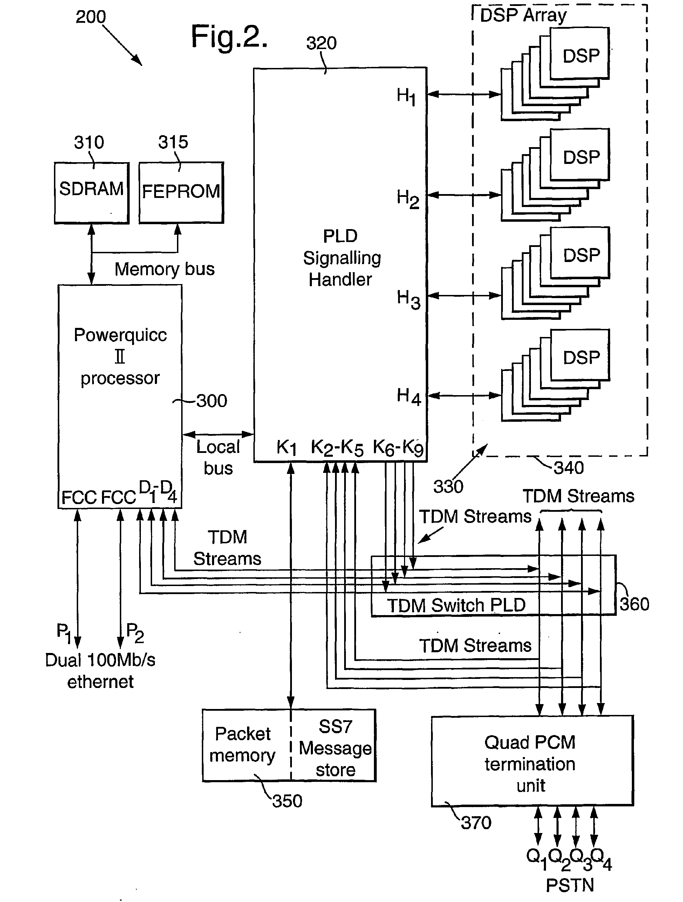

When the system 100 is in operation, there is nearly always at least some communication traffic data flowing between subscribers connected to the system 100; as a consequence, the system 100 is rarely inactive. Such lack of inactivity means that the gateways cannot be powered down for software upgrading purposes without interrupting data transmission therethrough. Conventional connection gateways are not capable of being software upgraded when in operation without disrupting data traffic transmission therethrough. In contrast, the inventors have devised a design of connection gateway and a method of operating such a gateway so that software therein is upgradable without interrupting data transmission through the gateway. In order to further describe the invention and its susceptibility to online software upgrades, the connection gateway 200 according to the invention will now be described with reference to Figure 2.

The gateway 200 is housed on a multilayer fibreglass circuit board and includes a number of principal parts and associated supporting components; the supporting components comprise power supply regulators, signal conditioners and line drivers and receivers. Such supporting components will be known to one ordinarily skilled in the art of digital circuit design.

The principal parts include a PowerQuiccII processor 300, a synchronous dynamic random access memory (SDRAM) 310, and a field programmable erasable programmable read only memory (FEPROM) 315. The pans further comprise a programmable logic device (PLD) signaling handler 320 and an associated array of twenty-four Motorola digital signal processors (DSP). The DSPs are indicated generally by 330 and shown included within a dotted line 340. The gateway 200 further comprises a memory buffer 350, a switch PLD 360 and a quad PCM termination unit 370 providing four PCM ports Q₁, Q₂, Q₃, Q₄. In the system 100, the ports Q₁ to Q₄ are connected to corresponding PCM ports of the exchange 170.
The processor 300 is a proprietary MCP8260 Motorola device effectively comprising two interconnected processors on a silicon chip, namely a first processor capable of executing power-PC type machine code, and a second communications control processor designed to handle Ethernet communication and associated input/output stacks. The second processor incorporates hardware that is capable of being configured to handle high-speed data flows, namely Ethernet data streams at a rate in the order of 100 Mbits/second.

Each DSP in the array 330 comprises a proprietary Motorola 56311 digital signal processor device incorporating onboard random access memory (RAM). The DSPs are arranged in four rows, each row comprising six DSPs. Each of the four rows is preferably allocated to a corresponding PCM port Q₁ to Q₄.

The principal parts are connected together as shown in Figure 2. In Figure 2, the Ethernet ports P₁, P₂ are connected to corresponding FCC ports of the PowerQuiccII processor 300. The processor 300 is connected via a memory bus to its SDRAM 310, to its FEPROM 315 and to a read only memory (ROM) (not shown). The ROM is programmed with basic start-up operating software that the processor 300 executes each time power is initially applied to the gateway 200 to bring it into operation. The processor 300 is further connected via a local bus to the signaling handler 320.

The handler 320 is a programmable gate array customized to function as a hardware backbone in the gateway 200. The handler 320 includes four communication ports H₁, H₂, H₃, H₄ connected to corresponding rows of DSPs. Moreover, the handler 320 further comprises a port K₁ connected to the memory buffer 350. Furthermore, the handler 320 includes signaling I/FS ports comprising four input ports K₂, K₃, K₄, K₅ and four output ports K₆, K₇, K₈, K₉. The input ports K₂ to K₅ are connected to die switch PLD 360 and also to the PCM termination unit 370. Likewise, the ports K₆ to K₉ are connected to the switch PLD 360. The switch PLD 360 is also connected to ports D₁, D₂, D₃, D₄ of the PowerQuiccII processor 300.

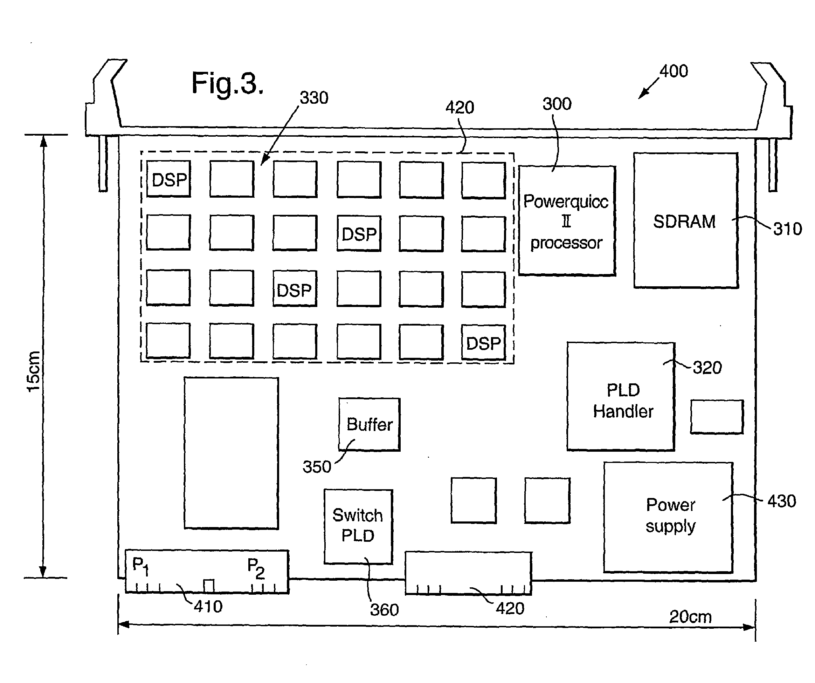

Referring to Figure 3, there is shown an upper plan view of a circuit board layout of the gateway 200, the board indicated generally by 400. The board has an approximate area of 15 cm by 20 cm. Along a lower edge of the board 400, there is incorporated a connector 410 for the Ethernet ports P₁, P₂. A connector 420 for the PCM ports Q₁ to Q₄ is included centrally along the lower edge. The array 330 of DSPs is incorporated on an upper lefthand side area of the board 400 shown delineated by a dotted line 420. The DSPs are disposed into four rows, each row comprising six DSPs. The handler 320 is situated towards a right-hand side of the board 400. The SDRAM 310 is included in an upper right-hand corner of the board 400. Power regulation components indicated by 430 are incorporated in a lower right-hand corner of the board 400. The buffer 350 and the switch PDL 360 are included towards a central region of the board 400.

An overview of operation of the gateway 200 in the system 100 will now be described with reference to Figures 1 and 2. The gateway 200 is capable of receiving or outputting Ethernet traffic at its ports P₁, P₂. The traffic can include one or more of the following:
(a) communication traffic to or from the network 120;
(b) MGCP controlling input instructions from the gatekeeper 150 or from the signaling gateway 140; or
(c) SNMP management instructions from the management system 160.

The PCM traffic flowing between the gateway 200 and the telephone exchange 170 can be in either E1 or T1 format.

The T1 format employs a data frame structure based on a data rate of 1544 kbits/second as defined in the ANSI series of standards T1.111. The T1 frame structure comprises frames where each frame comprises 24 time slots. Each time slot comprises 8 bits of data. Each frame further comprises an associated frame synchronisation "F" bit outside the time slots at the start of each frame indicating frame synchronisation. In addition, a multi-frame synchronisation signal is present for identifying the start of a multi-frame comprising 24 frames; such a signal is defined in International Telecommunication Union recommendation ITU-T G.704.

The E1 formal employs a data frame structure based on a data rate of 2048 kbits/second. The E1 frame structure comprises 32 time slots, each slot including 8 bits of data; the slots are numbered from slot 0 through to slot 31. Slot 0 is used for frame synchronisation. Moreover, slot 16 is used for SS7 signaling information as defined in recommendation ITU-T Q.703. Slots 1 to 15 are allocated to corresponding communication channels 1 to 15. Likewise, slots 17 to 31 are allocated to corresponding communication channels 16 to 30. Thus, E1 format PCM communication traffic can convey information corresponding to 30 communication channels. On account of the gateway 200 including the four PCM outputs Q₁ to Q₄, the gateway 200 can route any of the channels to the PCM outputs; the gateway 200 is thereby capable of providing 120 possible connection paths therethrough.

The PowerQuiccII processor 300 interprets communication traffic entering at its associated Ethernet ports P₁, P₂ and strips out communication traffic from instructions from the management system 160, or from the gatekeeper 150. The first processor in the PowerQuiccII processor 300 interprets the instructions and responds in a number of ways, for example:
(a) it configures the handler 320 and the DSPs to route channels in a particular manner through the gateway 200, for example channels 1 to 5 from Ethernet traffic provided at the port P₁ to the PCM port Q₃ and apply encryption to the traffic;
(b) it compiles a response message and sends it via one or more of the ports P₁, P₂ back to the management system 160, or to the gatekeeper 150, for example audit responses; or
(c) it loads data or software into specified memory areas of the gateway 200, for example into the SDRAM 310 or RAM associated with the DSPs.

The gateway 200 can be configured such that Ethernet communication traffic entering at its ports P₁, P₂ is directed through the second communications control processor of the PowerQuicII processor 300 and then out through the local bus to the handler 320 which outputs the traffic to the buffer 350. The traffic stored in the buffer 350 is subsequently output therefrom through the handler 320 again to one or more allocated DSPs in the array 330 which processes the traffic in a manner directed by the gatekeeper 150. When the traffic has been processed in the array 330, it is then output from one or more of the ports K₆ to K₉ of the handler 320 to the switching PLD 360 and further therefrom on to the termination unit 370. The unit 370 conditions the processed traffic for output at one or more of its PCM ports Q₁ to Q₄.

The gateway 200 can also be configured such that PCM communication traffic entering the PCM ports Q₁ to Q₄ is routed and processed in the gateway 200 depending on instructions from the management system 160, from the gatekeeper 150 or from the signaling gateway 140. For example, PCM communication traffic can be routed through the handler 320 to selected DSPs in the array 330 for processing. Corresponding processed traffic from the selected DSPs can then be routed through the handler 320 and its associated buffer 350 and eventually therefrom to the second communication control processor of the PowerQuiccII processor 300 for output therefrom as Ethernet traffic at one or more of its Ethernet ports P₁, P₂.

Thus, the gateway 300 can be configured to support bi-directional communication and processing therethrough.

The inventors have appreciated that software loaded from the management system 160 into connection gateways of the system 100 needs to be updated at intervals for a number of reasons. Such reasons include, for example, adding further clusters or changing a manner in which PowerQuiccII processors in the gateways process Ethernet traffic received from the network: 120. It is highly desirable that software can be downloaded from the management system 160 into the connection gateways without interrupting communication traffic flowing between the network 120 and the exchange 170. The inventors have devised a method of operating the system 100 and its associated connect.on gateways to achieve such updating.

In overview, the method involves the inventors incorporating the following features into the design of the connection gateways, the features comprising:
(a) partitioning the SDRAM 310 into three parts, a first part for storage of current operating software, a second part for storage of new operating software to be executed in substitution for the current software, and a third part for storing persistent data corresponding to status of the gateway and its connection relationship to the system 100; and
(b) including a special software object, namely a Mini Media Handler (MMH), into the current and new operating software stored in the SDRAM 310, the MMH invokable when transferring gateway operation from one version of operating software to another.

The MMH has a special characteristic that it can maintain operation of its associated connection gateway when a transition from the current software to the new software occurs. Moreover, the MMH does not require support of routines included within the current or new software to keep its associated gateway functional; thus, the MMH can continue functioning even if its associated operating software has ceased execution.

Operation of the system 100 downloading a current version of operating software into its connection gateways and then upgrading the current version of software to a new version will now be described with reference to Figures 1 and 2.

Initially when power is applied to the network 100, none of the connection gateways in the cluster 130 have operating software loaded thereinto; each of them only includes the aforementioned start-up operating software stored in associated on-board ROM. Initially, by executing the start-up software, the PowerQuiccII processor 300 in each gateway outputs data at its associated Ethernet ports P₁, P₂ making its presence in the system 100 known to the management system 160. Similarly, the gatekeeper 150 and the signaling gateway output data to make their presence known to the management system 160.

The system 160 proceeds to load operating software into the gatekeeper 150 and into the signaling gateway 140. The management system 160 further proceeds to issue a current version of operating software to each of the gateways in the cluster 130 via their associated Ethernet ports P₁, P₂. The current operating software is loaded into a first part of the SDRAM 310 of each gateway in the cluster 130. In each gateway, a portion of the operating software is then transferred from its associated PowerQuiccII processor 300 into RAM associated with each of its associated DSPs in the array 330. Each DSP has mutually identical software loaded into its associated RAM; however, if specifically necessary, each gateway in the cluster 130 is capable of being programmed so that its DSPs can be loaded with mutually different software although this is not a usual mode of operation. Software loaded into the DSPs is designed to enable the DSPs to interface to the handler 320 and to perform a range of signal processing functions, for example signal filtration, reformatting, encryption, decryption, compression and decompression functions. Conversely, software residing in the first part of the SDRAM 310 is for execution in the PowerQuiccII processor 300 of each connection gateway and is operable to interface the processor 300 to the management system 160, to the gatekeeper 150, to the signaling gateway 140 and enable the processor 300 to interpret commands and configure and connect its associated DSPs to perform desired routing and processing functions.

The software residing in the first part of the SDRAM of each gateway in the cluster 130 also includes the special software object, namely the Mini Media Handler (MMH). The MMH is normally inactive and is only activated by the PowerQuiccII processor 300 on special command from the operating system 160 when an online software switch is about to be performed.

When the current operating software has been loaded into the gateways in the cluster 130 and also into the gatekeeper 150 and the signaling gateway 140, the management system 160 then issues a command for the system 100 to commence operation. The system 100 then functions as described earlier in overview.

When the system 100 has been operational for a period of time, for example several weeks or months, a considerable amount of communication traffic corresponding to calls between subscribers will be flowing through the system 100; for examp.e, it is not unusual for 10000 calls to be simultaneously interfaced through the cluster 130 when it comprises 1000 connection gateways, each gateway providing 120 potential connections when working with E1 format communication traffic. Often, the data flow can be relatively constant and periods where the system 100 is in a quiet state do not occur predictably.

The inventors have appreciated that it is not practicable simply to witch off the system 100 and load new software into it when software upgrades are required because this will cancel all call connections in the system 100 and will appear as unreliability to subscribers. If use of the system 100 is sold to subscribers on the basis of reliability of connection, simply switching off the system 100 momentarily for software upgrading purposes can have serious financial consequences regarding customer billings and therefore revenue derived from the system 100.

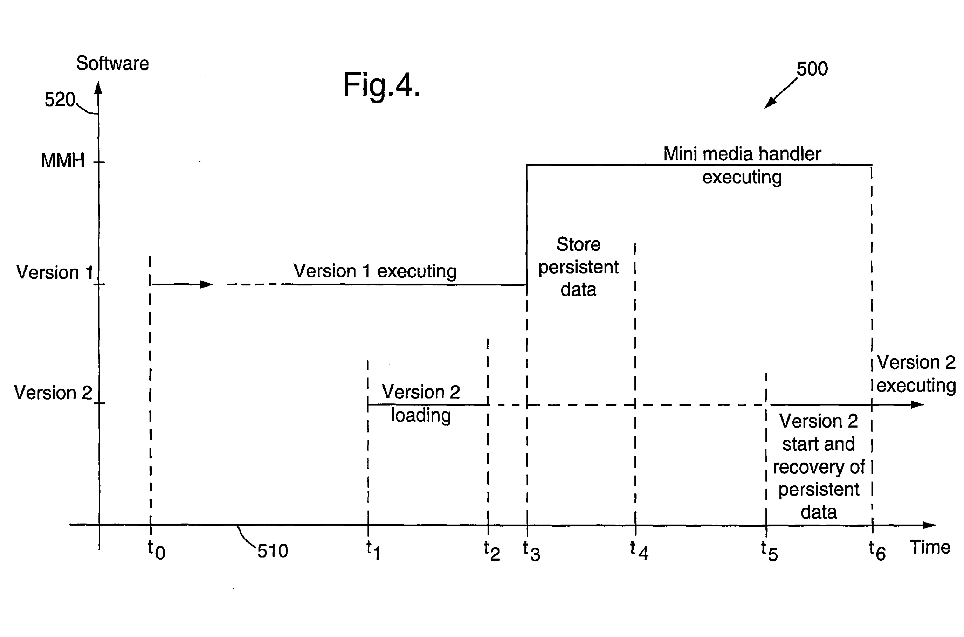

The gateways in the cluster 130 have therefore been designed to be capable of having their software upgraded without disturbing established calls routed through the system 100. In overview, a software switching process is invoked on command from the management system 160 when the current version of software being executing in the cluster 130 is to be replaced by a new version of software. The process is illustrated in Figure 4.

In Figure 4, there is a graphical representation of a online software switching process executable in the communication system 100 for switching from a current version of operating software to a new version of operating software, the process being represented by a graph indicated by 500; in Figure 4, "Version 1" and "Version 2" correspond to the current and new versions of operating software respectively. The graph 500 includes an abscissas axis 510 denoting time elapsed from left to right. Moreover, the graph 500 further includes an ordinate axis 520 on which is indicated various items of software.

At a time t₀, power is applied to the system 100 which initially starts up; the basic start-up software in the connection gateways causes them to announce their inclusion in the system 100 via Ethernet to the management system 160. Moreover, the basic software also sets a flag Fₛ in the SDRAM 310 of each connection gateway to record that no previous versions of operating software have yet been loaded into the gateway. After the time t₀, the management system 160 loads a current version of operating software into each of the connection gateways in the cluster 130. As described earlier, the current version of operating software is loaded into a first part of the SDRAM 310 in each connection gateway. Each connection gateway then proceeds to download from its SDRAM 310 via its PowerQuiccII processor 300 part of the current version of operating software into RAM of each of its associated DSPs. The management system 160 then issues an instruction for the system 100 to commence operation to convey communication traffic. The current version of software when executing in each connection gateway initially checks the flag Fₛ. The flag Fₛ is in an unset state as a consequence of action of the basic software; the current version of software identifies from the state of the flag Fₛ that it is not a software upgrade.

At a time t₁, for example several months after the time t₀, its operator instructs the management system 160 that a software update is required in the system 100. The management system 160 proceeds in response to retrieve from its memory a new version of operating software, and then issues an instruction to the connection gateways in the cluster 130 to prime them to receive the new software. The gateways in the cluster 130 then receive from the management system 160 via their Ethernet ports P₁, P₂ the new version of software which they each store in a second part of their SDRAM 310, thereby not overwriting the current version of software stored in the first part of their SDRAM 310. Whilst the new version of software is being downloaded into the gateways, the gateways continue to function by executing their current version of software. At a time t₂, the management system 160 has completed downloading the new version of software into the connection gateways.

At a time t₃, the management system 160 issues a command to the connection gateways in the cluster 130 to perform an online switch to executing the new version of software. This instruction causes each connection gateway executing the current version of software to execute a switchover routine. When executing the switchover routine, each gateway ignores further instructions from the management system 160, or from the gatekeeper 150; the current version of the software invokes its MMH. As aforementioned, the MMH is a special software object which can keep its associated gateway functioning without invoking operating system routines included in the current version of operating software. Moreover, each gateway sets its flag Fₛ to a set state indicative of operating software having already been executed in the gateway after the time to. Each gateway then proceeds to wait until its present tasks are concluded, for example subscribers connected thereto have completed their number dialing sequences or have hung up, rendering the gateway in a stable state. When each gateway has attained a stable state, it stores its persistent data describing its current state in a third part of its SDRAM 310. Persistent data will be described more fully later.

At a time t₄ when the connection gateways have stored their associated persistent data, the current version of software ceases executing leaving only the MMH executing.

At a time t₅, the MMH invokes the new version of operating software. The MMH and the new version are executed concurrently in a period between the time t₅ and a later time t₆, although during this period the new version does not implement any new connections through the DSPs of its gateway. The new version first checks the flag F₅ to determine therefrom whether or not the new version has been invoked as an upgrade or whether or not it has been invoked following a power down of the system 100; the flag F₆ was set as described above hence the new version determines therefrom that it is an upgrade. The new version then proceeds to retrieve the persistent data from its associated SDRAM 310 and load it into a random access memory on its processor 300. If the flag Fs were not set, the new version would interpret therefrom that it was not an upgrade and would not need to search for persistent data.

After retrieving the persistent data and setting its working parameters into accordance with the persistent data, the new version of software then at the time t₆ terminates execution of the MMH provided in the current version of software and assume: control of the gateway. At this stage, each connection gateway is fully under the control of its new version of software and can again receive instructions from the management system 160, and from the gatekeeper 150. The time t₆ signifies the end of the process for online switching of software in the connection gateways.

During the online switching process, software in the DSPs is not upgraded; doing so would potentially interrupt established communication paths through the cluster 130. Moreover, the new version of software, in similarity to the current version, is capable of operating the cluster 130 in the event of the system 100 being powered down and then restarted using the new software; thus, the new version of software includes its own MMH so that a switchover to other software from the new version of software can also be made if subsequently required. The process even allows reversion from the new version of software to the current version in case the new version of software is found to be defective when executed in the system 100, for example if it includes a software bug which only becomes apparent on live execution of the new version of software in the system 100. Such reversion to the current version of software also uses the process as shown in Figure 4 except that "Version 1" and "Version 2" become the new version of software and the current version of software respectively, the MMH being invoked corresponding to the one included in the new version of software.

In the process represented in Figure 4, waiting for each gateway to reach a stable state before storing its persistent data simplifies greatly the complexity of the persistent data and also simplifies tasks which the new version of software has to perform in a duration between the times t₅ and t₆. If each gateway is not permitted to reach a stable state, the size of the persistent data is considerably enlarged because it then has to include parameters describing instantaneous status of tasks being executed by the current version of software rather than end states of completed tasks. In practice, the persistent data has a size in the order of 100 kbytes when only end states are recorded therein.

Partitioning the SDRAM 310 of each gateway into first, second ar d third parts is governed by memory parameters allocated to the versions of software; the SDRAM 310 is a continuous memory without distinct hardwired separate regions. The current and new versions of software are stored in the mutually different first and second parts of the SDRAM 310 and the persistent data is stored in the third part of the SDRAM 310 which is not overwritten when the new version of software is loaded from the management system 160.

If the new version of software is invoked in the system 100 immediately after power being reapplied after a power supply interruption, the new version of software checks the flags Fₛ in each of the connection gateways and will proceed to load software received from the management system 160 to RAM of the DSPs in the event that the flags Fₛ are set to record that no earlier versions of operating software have been executed af:er power up.

Persistent data stored in the SDRAM 310 of each connection gateway can provide a record of the following parameters:
(a) a current configuration of the gateway, for example whether its ports Q₁ Q₂, Q₃, Q₄ are operable to receive E1 or T1 formatted communication traffic;
(b) configuration data relating to where the gateway is included in the system 100 and to what it is connected;
(c) licensing data relating to subscribers and users of the system 100;
(d) details of all established connections through the DSPs between the PCM ports Q₁ to Q₄ and the ports P₁, P₂, for example which DSP is handling a particular connection through the gateway and the filtration, encryption, decryption, data compression and reformatting functions that the DSP is configured to perform; and
(e) states of software objects running in the PowerQuiccII processor 300 just prior to storing the persistent data.

The Mini Media Handler will now be described in further detail. Unless the DSPs in the connection gateways are instructed to terminate processing functions allocated to them, they will continue to perform their appointed functions; thus, in order to maintain present operation of the DSPs, the MMH does not need to issue new instructions to the DSPs. Moreover, the second communications control processor in each PowerQuiccII processor 300 includes a number of data registers which determine routing of Ethernet data through its associated PowerQuiccII processor 300 into its associated buffer 350. It is the responsibility of the MMH to ensure that these registers are correctly set and that communication traffic flows between the ports P₁, P₂ and the DSPs via the buffer 350 and the handler 320. The MMH also has to be capable of handling a software call at the time t₄ from the current version of software invoking MMH operation and also be capable of passing software control of the gateway over to the new version of operating software when demanded by the new version at the time t₆. As described earlier, the MMH has to be capable of performing these operations without support from the current and new versions of software.

In practice, the process of online software switching represented in Figure 4 is relatively rapid; for example, only seconds of time arc required for loading the new version of software to the connection gateways in a period of t₁ to t₂, waiting for a stable state and storing persistent data in a period of t₃ to t₄ takes up to seconds because events such as dialing are timed out if not completed within seconds, and MMH execution in a period of t₄ and t_{G} lasts in a range of seconds. Transition from executing the current version of software to executing the MMH at the time t₄ occurs within a period which is in the order of time jitter typically observed in Ethernet communication traffic provided from the network 120. Likewise, transition from the MMH to the new version of software at the time t₆ is similarly also in the order of time jitter normally observed in the system 100. As a consequence, switchover from the current version to the new version of software is virtually undetectable by the system 100 except that the connection gateways will appear to be unresponsive to new call requests from the gatekeeper 150 when attempting to reach a stable state just prior to the time t₄; such unresponsiveness does not correspond to interruption of established connections through the system 100 as would occur in prior art communication systems when performing software upgrades. Thus, operating the system 100 as described above enables the gateways to be updated with new software online without interrupting operation of the system 100.
Table 1 provides a tabulated list of events of the online software switching process represented graphically in Figure 4.

**TABLE 1**

| STEP | TIME | OPERATION |
|---|---|---|
| 1 | t₀ | Power is applied to the system 100 |
| 2 | | Execution of the basic operating software is commenced in the connection gateways (from ROM), in the signaling gateway 140, in the gatekeeper 150 causing them to announce via Ethernet their existence in the system 100 to the management system 160 |
| 3 | | The flag Fₛ in each connection gateway is set to record that no previous version of operating software has been loaded since step 1 |
| 4 | | Operating software is downloaded from the management system 160 Into the gatekeeper 150, into the signaling gateway 140 and into the first part of the SDRAM 310 of each of the connection gateways in the cluster 130 |
| 5 | | Each connection gateway loads software into its associated DSPs |
| 6 | | The management system 160 issues to the system 100 an instruction to commence operation |
| 7 | | The current version of operating software in each connection gateway checks the status of its associated flag Fₛ and then continues to bring the gateway into operation |
| 8 | t₁ | The management system 160 issues an instruction that the new version of software is about to be downloaded |
| 9 | t₂ | The new version of software is downloaded from the management system 160 into the second part of the SDRAM 310 of each connection gateway |
| 10 | t₃ | The management system 160 issues a command to the connection gateways to switch over to executing the new version of software |
| 11 | | The connection gateways restrict their SNMP command interpretation to providing audits only, namely status reports back to the gatekeeper 150 |
| 12 | | The connection gateways restrict their MGCP command interpretation to providing audits only, namely status reports back to the gatekeeper 150 |
| 13 | | Each connection gateway sets its associated flag Fₛ to record that the current version of software has been executed after the time to |
| 14 | | Each gateway completes its present tasks without responding to new requests from the gatckeeper 150, from the signaling gateway 140 or from the management system 160; each gateway thereby attaining a stable state |
| 15 | | Each connection gateway stores its persistent data corresponding to its stable state in a third part or its SDRAM310 |
| 16 | t₄ | Each connection gateway invokes its MMH software and execution of the current version of software is then terminated |
| 17 | t₅ | The new version of software commences execution in each gateway concurrently with the MMH software, but full control of the connection gateway is not yet passed to the new version |
| 18 | | In each connection gateway, the new version of software checks its flag Fₛ to determine whether the new version is an upgrade or invoked in an initial powering up of the system 100 |
| 19 | | In each connection gateway, the new version of software leaves the DSPs, the handler 320 and the PowerQuiccII processor 300 SNMP (Ethernet) in their presently established state if the flag Fₛ is set to indicate that the new version is an update |
| 20 | | In each connection gateway, the new version of software performs a "sanity check" to ensure that loss of connection gateway functionality will not occur when he new version of software assumes full gateway control; if there is a problem, control remains with the MMH and a report is sent back via Ethernet SNMP to the management system 160 |
| 21 | t₆ | In each connection gateway, the MMH passes full gateway control to the new version of software; execution of the MMH software is terminated simultaneously with the new version assuming full control |
| 22 | | In each connection gateway, the PowerQuiccII processor 300 is rendered by the new software fully responsive again to SNMP and MGCP communications received at its associated P₁, P₂ Ethernet pons |

It will be appreciated that modifications can be made to the system 100 without departing from the scope of the invention. For example, the DSPs and the PowerQuiccII devices can be replaced by alternative proprietary devices providing similar general data processing and interpretation functions respectively. The PLD handler 320 can be replaced with other semiconductor devices capable of providing an interface between the processor 300 and the DSPs.

Moreover, the current and new versions of software can be structured in a number of alternative ways to control each gateway. Thus, the current and new versions of software can be substituted with alternative versions provided that:
(a) the alternative versions can control their associated connection gateways; and
(b) gateway operation can be transferred between the alternative versions of software by invoking intermediary software, namely the MMH software, and using persistent data storage to record status of the connection gateways at switchover from one version of the software to another.

Other methods of online software updating can be used for upgrading software loaded into the gatekeeper 150 and also into the DSPs of each connection gateway; for example, DSPs can have loaded thereinto software upgrades when they are not actively providing communication connections therethrough.

## Claims

1. A method of performing online switching of software from executing a first version of operating software to executing a second version of operating software in a communication system (100), the system (100) incorporating connecting means (130, 140, 150) controllable using the software for routing and processing communication traffic flowing between subscribers (110, 180) connected to the system (100) in response to subscriber demand, the method **characterised in that** it includes the steps of:
(a) the system (100) with its connecting means (130) executing the first version of the software;
(b) receiving the second version of software at the connecting means (130);
(c) receiving an instruction at the connecting means (130) to perform an online switch of software;
(d) storing persistent data describing at least routing connections established through the connecting means;
(e) transferring control of the connecting means (130) from the first version of software to interfacing software (MMH) executing in the connecting means (130) and operable to maintain established routing connections through the connecting means (130);
(f) executing the second version of software concurrently with the interfacing software (MMH) to enable the second version to recover the persistent data and configure itself in response thereto; and
(g) passing control of the connecting means from the interfacing software to the second version of software.

2. A method according to Claim 1 wherein the interfacing software is included in the first version of software, the interfacing software (MMH) controlling the connecting means (130) without support from other parts of the first version of software.

3. A method according to Claim 1 or 2 wherein the persistent data includes one or more of:
(a) a record of the state of the connecting means (130) at an instance when the persistent data is stored;
(b) a record of the manner in which the connecting means (130, 140, 150) is included into the system (100, 120, 170);
(c) licensing data relating to subscribers (110, 180) and users of the system;
(d) a record of all established connections and associated processing functions through the connecting means (130); and
(e) states of software objects running in the connecting means (130) when the persistent data is stored.

4. A method according to Claim 1, 2 or 3 wherein, after step (c), the first version of software is operable to render the connecting means (130) unresponsive to new subscriber requests to establish connections through the connecting means (130) between subscribers (110, 180), thereby enabling the connecting means (130) to attain a stable state with current tasks completed prior to storing the persistent data.

5. A method according to Claim 1, 2, 3 or 4 wherein the system (100) downloads the versions of the software to the connecting means (130) and issues the instruction in step (c) to perform an online switch of software.

6. A method according to Claim 5 wherein the managing means (160) is operable to communicate to the connecting means using messages in Ethernet format.

7. A method according to Claim 6 wherein the managing means employs SNMP protocol to communicate to the connecting means (130).

8. A method according to any preceding claim wherein the connecting means (130) interfaces between Ethernet communication traffic and E1 or T1 format pulse code modulated (PCM) communication traffic.

9. A method according to any preceding claim wherein the connecting means (130) comprises a plurality of connection gateways (200), each gateway (200) including a host processor (300) and an array (330) of digital signal processors (DSPs), wherein the host processor receives routing instructions and allocates connection routes through the signal processors to provide communication paths between subscribers (110, 180).

10. A method according to Claim 9 wherein the host processor (300) in each gateway (200) handles Ethernet format communication traffic and the DSPs handle PCM communication traffic, and wherein the host processor (300) communicates with the DSPs thereby providing translation of communication traffic between Ethernet format (P₁, P₂) and PCM E1 or T1 format (Q₁, Q₂, Q₃, Q₄) through the gateway.

11. A method according Claim 9 or 10 wherein the interfacing software is operable in steps (e) and (f) to maintain Ethernet communication traffic flow through the host processor (300).

12. A method according to Claim 9, 10 or 11 wherein the array (330) of each gateway groups its DSPs in rows, each row hardwired to a respective PCM communication traffic port (Q₁, Q₂, Q₃, Q₄) of the gateway.

13. A method according to Claim 9, 10, 11 or 12 wherein the host processor (300) is connected to associated memory means (310), the second version of software in step (c) loaded into a second part of the memory means so as not to overwrite the first version of software residing in a first part of the memory means (310).

14. A method according to any one of Claims 9 to 13 wherein the host processor (300) is connected to associated memory means (310) for storing in a third part thereof the persistent data in step (d), the third part not overwritten when the first and second versions of software are loaded into the memory means (310).

15. A method according to any one of Claims 9 to 14 wherein software residing in random access memory of the signal processors and controlling operation of the signal processors remains unupdated in steps (c) to (g).

16. A method according to any preceding claim wherein the first and second versions of software are both operable to render the connecting means (130) functional in the system (100) when invoked after a power interruption to the system (100).

17. A method according to any preceding claim wherein the connecting means (130) includes basic operating software stored therein in non-volatile memory, the basic operating software operable to set flagging means (Fₛ) for enabling the second version of software to determine from the flagging means (Fₛ) whether it is invoked after a power supply interruption to the system (100) or is invoked when performing online switching of software in the system (100).

18. A communication system (100), the system (100) comprising connecting means (130, 140, 150) and software means for controlling the connecting means for routing and processing communication traffic flowing between subscribers (110, 180) connected to the system (100) in response to subscriber demand, in which the software means comprises a first version of the software **characterised in that** the system also comprises means for receiving a second version of the software at the connecting means (130) and means for receiving an instruction at the connecting means to perform an online switch of software;
means for storing persistent data describing at least routing connections established through the connecting means;
interfacing software (MMH) for executing in the connecting means (130) for maintaining established routing connections through the connecting means (130);
means for transferring control of the connecting means (130) from the first version of software to interfacing software (MMH);
means for executing the second version of software concurrently with the interfacing software (MMH) for enabling the second version to recover the persistent data and to configure itself in response thereto; and
means for passing control of the connecting means from the interfacing software (MMH) to the second version of software.

19. The communication system according to Claim 18 comprising managing means 160) for downloading the versions of the software to the connecting means (130) and for initializing an online switch of software.

20. The communication system according to claim 18 or 19 wherein the managing means (160) is operable to communicate to the connecting means using messages in Ethernet format.

21. The communication system according to any of Claims 18 to 20 wherein the connecting means (130) comprises a plurality of connection gateways (200), each gateway including a host processor (300) and an array (330) of digital signal processors (DSPs), in which each host processor comprises means for receiving routing instructions and for allocating connection routes through the DSPs.

22. The communication system according to Claim 21 wherein the host processor (300) in each gateway (200) comprises means to communicate with Ethernet format communication traffic and in which the DSPs comprise means to communicate with PCM communication traffic, in which the host processor (300) comprises means for communication with the DSPs and for translation of communication traffic between Ethernet format (P₁, P₂) and PCM E1 or T1 format (Q₁, Q₂, Q₃ Q) through the gateway.

23. The communication system according to Claim 21 or 22 wherein the array (330) of each gateway comprises the DSPs grouped in rows, in which each row is hardwired to a respective PCM communication traffic port (Q₁, Q₂, Q₃ Q₄) of the gateway.

24. The communications system according to any of claims 21 to 23 wherein each host processor (300) is connected to associated memory means (310), in which the associated memory means comprises a first part for storing the first version of software and a second part for storing the second version of software so that the first part is not overwritten when the second version of software is loaded into the memory means.

25. The communications system according Claim 24 in which the associated memory means comprises a third part for storing the persistent data so that the third part is not overwritten when the first and second versions of software are loaded into the memory means (310).

26. The communications system according to any of Claims 18 to 25 wherein the connecting means (130) comprises flagging means (Fₛ) and non-volatile memory for storing basic operating software in which the basic operating software is operable to set flagging means (Fₛ) for indicating to the second version of software whether it is invoked after a power supply interruption to the system (100) or is invoked when performing online switching of software in the system (100).

## Patentansprüche

1. Verfahren zum Durchführen für ein Online-Austausch von Software von einer Ausführung einer ersten Version einer Betriebssoftware zur Ausführung einer zweiten Version einer Betriebssoftware in einem Kommunikationssystem (100), wobei das System (100) ein Verbindungsmittel (130,140,150) enthält, welches steuerbar die Software zum Leiten und Verarbeiten eines Kommunikationsverkehrs, welcher zwischen Teilnehmern (110,180), weiche am System (100) verbunden sind, fließt, in Ansprechen auf eine Teilnehmer-Anforderung verwendet, wobei das Verfahren **dadurch gekennzeichnet ist, dass** es die Schritte enthält:
(a) Ausführen der ersten Version der Software durch das System (100) mit seinem Verbindungsmittel (130);
(b) Empfangen der zweiten Version von Software am Verbindungsmittel (130) ;
(c) Empfangen einer Anweisung am Verbindungsmittel (130), um ein Online-Austausch von Software durchzuführen;
(d) Speichern von Dauer-Daten, welche zumindest Leitverbindungen beschreiben, welche durch das Verbindungsmittel aufgebaut werden;
(e) Übertragen von einer Steuerung des Verbindungsmittels (130) von der ersten Version von Software auf eine Schnittstellen-Software (MMH), welche im Verbindungsmittel (130) ausgeführt wird, und dazu betriebsbereit ist, aufgebaute Leitverbindungen durch das Verbindungsmittel (130) aufrecht zu erhalten;
(f) Ausführen der zweiten Version von Software gleichzeitig mit der Schnittstellen-Software (MMH), um es der zweiten Version zu ermöglichen, die Dauer-Daten wiederherzustellen, und sich selber in Ansprechen darauf zu konfigurieren; und
(g) Passieren von einer Steuerung des Verbindungsmittels von der Schnittstellen-Software auf die zweite Version von Software.

2. Verfahren nach Anspruch 1, bei welchem die Schnittstellen-Software in der ersten Version von Software enthalten ist, wobei die Schnittstellen-Software (MMH) das Verbindungsmittel (130) ohne Unterstützung von anderen Teilen der ersten Version von Software steuert.

3. Verfahren nach Anspruch 1 oder 2, bei welchem die Dauer-Daten eines oder mehrere enthalten aus :
(a) eine Aufzeichnung des Zustandes des Verbindungsmittels (130) bei einem Vorgang, bei welchem die Dauer-Daten gespeichert werden;
(b) eine Aufzeichnung von der Weise, auf welche das Verbindungsmittel (130,140,150) im System (100,120,170) enthalten ist;
(c) Lizenzierungs-Daten, welche sich auf Teilnehmer (110,180) und Benutzer des Systems beziehen;
(d) eine Aufzeichnung von allen aufgebauten Verbindungen und zugehörigen Verarbeitungsfunktionen durch das Verbindungsmittel (130) ; und
(e) Zustände von Software-Objekten, welche im Verbindungsmittel (130) laufen, wenn die Dauer-Daten gespeichert werden.

4. Verfahren nach einem der Ansprüche 1 bis 3, bei welchem nach Schritt (c) die erste Version von Software dazu betriebsbereit ist, das Verbindungsmittel (130) unempfänglich auf neue Teilnehmer-Anfragen zum Aufbauen von Verbindungen durch das Verbindungsmittel (130) zwischen Teilnehmern (110,180) zu machen, wodurch es ermöglicht wird, dass das Verbindungsmittel (130) einen stabilen Zustand mit aktuellen Aufgaben erlangt, welche vor einem Speichern der Dauer-Daten vollendet werden.

5. Verfahren nach einem der Ansprüche 1 bis 4, bei welchem das System (100) die Versionen von der Software an das Verbindungsmittel (130) herunterlädt und die Anweisung in Schritt (c) zum Durchführen eines Online-Austausches von Software ausgibt.

6. Verfahren nach Anspruch 5, bei welchem das Verwaltungsmittel (160) dazu betriebsbereit ist, um mit dem Verbindungsmittel unter Verwendung von Meldungen im Ethernet-Format zu kommunizieren.

7. Verfahren nach Anspruch 6, bei welchem das Verwaltungsmittel ein SNMP Protokoll verwendet, um mit dem Verbindungsmittel (130) zu kommunizieren.

8. Verfahren nach einem der vorhergehenden Ansprüche, bei welchem das Verbindungsmittel (130) eine Schnittstelle zwischen Ethernet-Kommunikationsverkehr und E1 oder T1 Format Puls-Code modulierten (PCM) Kommunikationsverkehr bildet.

9. Verfahren nach einem der vorhergehenden Ansprüche, bei welchem das Verbindungsmittel (130) eine Mehrzahl von Verbindungs-Gateways (200) enthält, wobei jedes Gateway (200) einen Host-Prozessor (300) und ein Array (330) von digitalen Signalprozessoren (DSPs) enthält, wobei der Host-Prozessor Leitanweisungen empfängt und Verbindungsrouten durch die Signalprozessoren zuweist, um Kommunikationspfade zwischen Teilnehmern (110,180) bereitzustellen.

10. Verfahren nach Anspruch 9, bei welchem der Host-Prozessor (300) in jedem Gateway (200) einen Ethernet-Format-Kommunikationsverkehr handhabt, und die DSPs einen PCM-Kommunikationsverkehr handhaben, und bei welchem der Host-Prozessor (300) mit den DsPs kommuniziert, wodurch eine Übersetzung von Kommunikationsverkehr zwischen Ethernet-Format (P₁, P₂) und PCM E1 oder T1 Format (Q₁, Q₂, Q₃, Q₄) durch das Gateway bereitgestellt wird.

11. Verfahren nach Anspruch 9 oder 10, bei welchem die Schnittstellen-Software, dazu betriebsbereit ist, in Schritten (e) und (f) einen Ethernet-Kommunikationsverkehr-Fluss durch den Host-Prozessor (300) aufrecht, zu exhalten.

12. Verfahren nach einem der Ansprüche 9 bis 11, bei welchem das Array (330) von jedem Gateway seine DSPs in Zeilen gruppiert, wobei jede Zeile mit einem jeweiligen PCM-Kommunikationsverkehr-Anschluss (Q₁, Q₂, Q₃ Q₄) des Gateways verdrahtet ist.

13. Verfahren nach einem der Ansprüche 9 bis 12, bei welchem der Host-Prozessor (300) mit einem zugehörigen Speichermittel (310) verbunden ist, wobei die zweite Version von Software in schritt (c) derart in einen zweiten Teil des Speichermittels geladen wird, sodass die erste Version von Software, welche sich in einem ersten Teil des Speichermittels (310) befindet, nicht überschrieben wird.

14. Verfahren nach einem der Ansprüche 9 bis 13, bei welchem der Host-Prozessor (300) mit einem zugehörigen Speichermittel (310) verbunden ist, um in einem dritten Teil davon die Dauer-Daten in Schritt (d) zu speichern, wobei der dritte Teil nicht überschrieben wird, wenn die erste und zweite Version von Software in das Speichermittel (310) geladen werden.

15. Verfahren nach einem der Ansprüche 9 bis 14, bei welchem eine Software, welche sich in einem Direktzugriffsspeicher der Signalprozessoren befindet und einen Betrieb der Signalprozessoren steuert, in Schritten (c) bis (g) unaktualisiert bleibt.

16. verfahren nach einem der vorhergehenden Ansprüche, bei welchem die erste und zweite Version von Software beide dazu betriebsbereit sind, das Verbindungsmittel (130) im System (100) funktionsfähig zu machen, wenn sie nach einer Energieunterbrechung auf das System (300) aufgerufen werden.

17. Verfahren nach einem der vorhergehenden Ansprüche, bei welchem das Verbindungsmittel (130) eine Basis-Betriebssoftware enthält, welche darin in einem nicht-flüchtigen Speicher gespeichert ist, wobei' die Basis-Betriebssoftware dazu betriebsbereit ist, um Kennzeichnungsmittel (Fₛ) zu setzen, um es der zweiten Version von Software zu ermöglichen, anhand des Kennzeichnungsmittels (Fₛ) zu bestimmen, ob sie nach einer Energieversorgungs-Unterbrechung auf das System (100) aufgerufen wird oder beim Durchführen eines Online-Austausches von Software im System (100) aufgerufen wird.

18. Kommunikationssystem (100), wobei das System (100) ein Verbindungsmittel (130,140,150) und ein Softwaremittel zum Steuern des Verbindungsmittels zum Leiten und Verarbeiten eines Kommunikationsverkehrs, welcher zwischen Teilnehmern (110,180) fließt, welche mit dem System (100) verbunden sind, in Ansprechen auf eine Teilnehmer-Anforderung enthält, wobei das Softwaremittel eine erste Version der Software enthält, **dadurch gekennzeichnet, dass** das System ebenfalls enthält:
ein Mittel zum Empfangen einer zweiten Version der Software am Verbindungsmittel (130) und ein Mittel zum Empfangen einer Anweisung am Verbindungsmittel zum Durchführen von einem Online-Austausch von Software;
ein Mittel zum Speichern von Dauer-Daten, welche zumindest Leitverbindungen beschreiben, welche durch das Verbindungsmittel aufgebaut sind;
eine Schnittstellen-Software (MMH) zur Ausführung im Verbindungsmittel (130), um aufgebaute Leitverbindungen durch
das Verbindungsmittel (130) aufrecht zu erhalten;
ein Mittel zum Übertragen von einer Steuerung des Verbindungsmittels (130) von der ersten Version von Software auf die Schnittstellen-Software (MMH) ;
ein Mittel zum gleichzeitigen Ausführen der zweiten Version von Software mit der Schnittstellen-Software (MMH), um es der zweiten Version zu ermöglichen, die Dauer-Daten wiederherzustellen, und sich in Ansprechen darauf selber zu konfigurieren; und
ein Mittel zum Passieren von einer Steuerung des Verbindungsmittels von der Schnittstellen-Software (MMH) auf die zweite Version von Software.

19. Kommunikationssystem nach Anspruch 18, welches ein Verwaltungsmittel (160) zum Herunterladen der Versionen von der Software an das Verbindungsmittel (130), und zum Initialisieren eines Online-Austausches von Software enthält.

20. Kommunikationssystem nach Anspruch 18 oder 19, bei welchem das Verwaltungsmittel (160) dazu betriebsbereit ist, um mit dem Verbindungsmittel unter Verwendung von Meldungen im Ethernet-Format zu kommunizieren.

21. Kommunikationssystem nach einem der Ansprüche 18 bis 20, bei welchem das Verbindungsmittel (130) eine Mehrzahl von Verbindungs-Gateways (200) enthält, wobei jedes Gateway einen Host-Prozessor (300) und ein Array (330) von digitalen Signalprozessoren (DSPs) enthält, wobei jeder Host-Prozessor ein Mittel zum Empfangen von Leitanweisungen und zum Zuweisen von Verbindungsrouten durch die DSPs enthält.

22. Kommunikationssystem nach Anspruch 21, bei welchem der Host-Prozessor (300) in jedem Gateway (200) ein Mittel zum Kommunizieren mit Ethernet-Format-Kommunikationsverkehr enthält, und bei welchem die DSPs ein Mittel zum Kommunizieren mit PCM-Komntunikationsverkehr enthalten, wobei der Host-Prozessor (300) ein Mittel zum Kommunizieren mit den DSPs und zum Übersetzen von Kommunikationsverkehr zwischen Ethernet-Format (P₁, P₂) und PCM E1 oder T1 Format (Q₁ ,Q₂, Q₃, Q₄) durch das Gateway enthält.

23. Kommunikationssystem nach Anspruch 21 oder 22, bei welchem das Array (330) von jedem Gateway die DSPs in Zeilen gruppiert enthält, wobei jede Zeile mit einem jeweiligen PCM-Kommunikationsverkehr-Anschluss (Q₁, Q₂, Q₃, Q₄) des Gateways verdrahtet ist.

24. Kommunikationssystem nach einem der Ansprüche 21 bis 23, bei welchem jeder Host-Prozessor (300) mit einem zugehörigen Speichermittel (310) verbunden ist, wobei das zugehörige Speichermittel einen ersten Teil zum Speichern der ersten Version von Software und einen zweiten Teil zum Speichern der zweiten Version von Software enthält, sodass der erste Teil nicht überschrieben wird, wenn die zweite Version von Software in das Speichermittel geladen wird.

25. Kommunikationssystem nach Anspruch 24, bei welchem das zugehörige Speichermittel einen dritten Teil zum Speichern der Dauer-Daten enthält, sodass der dritte Teil nicht überschrieben wird, wenn die erste und zweite Version von Software in das Speichermittel (310) geladen werden.

26. Kommunikationssystem nach einem der Ansprüche 18 bis 25, bei welchem das Verbindungsmittel (130) ein Kennzeichnungsmittel (Fₛ) und einen nicht-flüchtigen Speicher zum Speichern von einer Basis-Betriebssoftware enthält, wobei die Basis-Betriebssoftware dazu betriebsbereit ist, um das Kennzeichnungsmittel (Fₛ) zu setzen, um der zweiten Version von Software anzuzeigen, ob sie nach einer Energieversorgungs-Unterbrechung auf das System (100) aufgerufen wird oder beim Durchführen eines Online-Austausches von Software im System (100) aufgerufen wird.

## Revendications

1. Procédé pour réaliser une commutation en ligne d'un logiciel depuis l'exécution d'une première version d'un logiciel de base vers l'exécution d'une seconde version d'un logiciel de base dans un système de communication (100), le système (100) comprenant un moyen de connexion (130, 140, 150) pouvant être commandé en utilisant le logiciel pour router et traiter le trafic de communication circulant entre les abonnés (110, 180) connectés au système (100) en réponse à la demande d'un abonné, le procédé étant **caractérisé en ce qu'**il comprend les étapes de :
(a) exécution de la première version du logiciel par le système (100) avec son moyen de connexion (130) ;
(b) réception de la seconde version du logiciel au niveau du moyen de connexion (130) ;
(c) réception d'une instruction au niveau du moyen de connexion (130) pour exécuter une commutation en ligne du logiciel ;
(d) stockage des données rémanentes décrivant au moins des connexions de routage établies par le moyen de connexion ;
(e) transfert de commande du moyen de connexion (130) depuis la première version du logiciel en un logiciel d'interfaçage (MMH) exploité dans le moyen de connexion (130) et pouvant être utilisé pour maintenir des connexions de routage établies par le moyen de connexion (130) ;
(f) exécution de la seconde version du logiciel concurremment au logiciel d'interfaçage (MMH) pour permettre à la seconde version de récupérer les données rémanentes et de se configurer en réponse à celles-ci ; et
(g) passage de commande du moyen de connexion depuis le logiciel d'interfaçage vers la seconde version du logiciel.

2. Procédé selon la revendication 1 dans lequel le logiciel d'interfaçage est inclus dans la première version du logiciel, le logiciel d'interfaçage (MMH) commandant le moyen de connexion (130) sans support d'autres parties de la première version du logiciel.

3. Procédé selon la revendication 1 ou 2 dans lequel les données rémanentes comprennent un ou plusieurs éléments parmi :
(a) un enregistrement de l'état du moyen de connexion (130) à un moment où les données rémanentes sont stockées ;
(b) un enregistrement de la manière avec laquelle le moyen de connexion (130, 140, 150) est inclus dans le système (100, 120, 170) ;
(c) des données de licence relatives aux abonnés (110, 180) et aux utilisateurs du système ;
(d) un enregistrement de toutes les connexions établies et des fonctions de traitement correspondantes par le moyen de connexion (130) ; et
(e) les états des objets logiciels fonctionnant dans le moyen de connexion (130) lorsque les données rémanentes sont stockées.

4. Procédé selon la revendication 1, 2 ou 3 dans lequel, après l'étape (c), la première version du logiciel peut être utilisée pour que le moyen de connexion (130) ne réponde plus aux nouvelles demandes des abonnés afin d'établir des connexions par le moyen de connexion (130) entre les abonnés (110, 180), permettant ainsi au moyen de connexion (130) d'atteindre un état stable avec des tâches actuelles terminées avant le stockage des données rémanentes.

5. Procédé selon La revendication 1, 2, 3 ou 4 dans Lequel le système (100) télécharge les versions du logiciel vers le moyen de connexion (130) et délivre l'instruction à l'étape (c) pour exécuter une commutation en ligne du logiciel.

6. Procédé selon la revendication 5 dans lequel le moyen de gestion (160) peut être utilisé pour communiquer avec le moyen de connexion en utilisant des messages dans un format Ethernet.

7. Procédé selon la revendication 6 dans lequel le moyen de gestion emploie un protocole SNMP pour communiquer avec le moyen de connexion (130).

8. Procédé selon l'une quelconque des revendications précédentes dans lequel le moyen de connexion (130) interface entre le trafic de communication Ethernet et le trafic de communication modulé par impulsions et codé (PCM) dans un format E1 ou T1.

9. Procédé selon l'une quelconque des revendications précédentes dans lequel le moyen de connexion (130) comprend une pluralité de passerelles de connexion (200), chaque passerelle (200) comprenant un processeur hôte (300) et une matrice (330) de processeurs de signaux numériques (DSP), dans lequel le processeur hôte reçoit des instructions de routage et alloue des routes de connexion par le biais des processeurs de signaux afin de fournir des chemins de communication entre les abonnés (110, 180).

10. Procédé selon la revendication 9 dans lequel le processeur hôte (300) dans chaque passerelle (200) prend en charge le trafic de communication au format Ethernet et les DSP prennent en charge le trafic de communication PCM, et dans lequel le processeur hôte (300) communique avec les DSP, fournissant ainsi une traduction du trafic de communication entre le format Ethernet (P₁, P₂) et le format E1 ou T1 PCM (Q₁, Q₂, Q₃, Q₄) par la passerelle.

11. Procédé selon la revendication 9 ou 10 dans lequel le logiciel d'interfaçage peut être utilisé dans les étapes (e) et (f) pour maintenir le flux du trafic de communication Ethernet par le processeur hôte (300).

12. Procédé selon la revendication 9, 10 ou 11 dans lequel la matrice (330) de chaque passerelle regroupe ses DPS en lignes, chaque ligne étant câblée vers un port de trafic de communication PCM (Q₁, Q₂, Q₃, Q₄) de la passerelle.

13. Procédé selon la revendication 9, 10, 11 ou 12 dans lequel le processeur hôte (300) est connecté à un moyen de mémoire correspondant (310), la seconde version du logiciel à l'étape (c) chargée dans une deuxième partie du moyen de mémoire de façon à ne pas écraser la première version du logiciel résidant dans une première partie du moyen de mémoire (310).

14. Procédé selon l'une quelconque des revendications 9 à 13 dans lequel le processeur hôte (300) est connecté au moyen de mémoire correspondant (310) pour stocker dans une troisième partie de celui-ci les données rémanentes à l'étape (d), la troisième partie n'étant pas écrasée lorsque les première et seconde versions du logiciel sont chargées dans le moyen de mémoire (310).

15. Procédé selon l'une quelconque des revendications 9 à 14 dans lequel le logiciel résidant dans la mémoire vive des processeurs de signaux et commandant l'opération des processeurs de signaux reste non actualisé pendant les étapes (c) à (g).

16. procédé selon l'une quelconque des revendications précédentes dans lequel les première et seconde versions du logiciel peuvent toutes les deux être utilisées pour rendre le moyen de connexion (130) fonctionnel dans le système (100) en cas d'appel après une coupure d'alimentation vers le système (100).

17. Procédé selon l'une quelconque des revendications précédentes dans lequel le moyen de connexion (130) comprend un logiciel de base stocké dans une mémoire non volatile, le logiciel de base étant utilisé pour définir un moyen de balisage (Fₛ) afin de permettre à la seconde version du logiciel de déterminer à partir du moyen de balisage (Fₛ) si l'appel se produit après une coupure d'alimentation vers le système (100) ou lors de l'exécution de la commutation en ligne du logiciel dans le système (100).

18. Système de communication (100), le système (100) comprenant un moyen de connexion (130, 140, 150) et un moyen logiciel pour commander le moyen de connexion afin de router et traiter le trafic de communication circulant entre les abonnés (110, 180) connectés au système (100) en réponse à la demande de l'abonné, dans lequel le moyen logiciel comprend une première version du Logiciel **caractérisé en ce que** le système comprend également un moyen pour recevoir une seconde version du logiciel au niveau du moyen de connexion (130) et un moyen pour recevoir une instruction au niveau du moyen de connexion afin d'effectuer une commutation en ligne du logiciel ; un moyen pour stocker les données rémanentes décrivant au moins les connexions de routage établies par le moyen de connexion ;
un logiciel d'interfaçage (MMH) exécuté dans le moyen de connexion (130) pour maintenir les connexions de routage établies par le moyen de connexion (130) ;
un moyen pour transférer la commande du moyen de connexion (130) de la première version du logiciel vers le logiciel d'interfaçage (MMH) ;
un moyen pour exécuter la seconde version du logiciel concurremment au logiciel d'interfaçage (MMH) afin de permettre à la seconde version de récupérer les données rémanentes et de se configurer en réponse à celles-ci ; et
un moyen pour passer la commande du moyen de connexion depuis le logiciel d'interfaçage (MMH) à la seconde version du logiciel.

19. Système de communication selon la revendication 18 comprenant un moyen de gestion (160) pour télécharger les versions du logiciel vers le moyen de connexion (130) et pour initialiser une commutation en ligne du logiciel.

20. Système de communication selon la revendication 18 ou 19 dans lequel le moyen de gestion (160) est utilisé pour communiquer avec le moyen de connexion en utilisant des messages dans le format Ethernet.

21. Système de communication selon l'une quelconque des revendications 18 à 20 dans lequel le moyen de connexion (130) comprend une pluralité de passerelles de connexion (200), chaque passerelle (200) comprenant un processeur hôte (300) et une matrice (330) des processeurs de signaux numériques (DSP), dans lequel chaque processeur hôte comprend un moyen pour recevoir des instructions de routage et allouer des routes de connexion par le biais des DSP.

22. Système de communication selon la revendication 21 dans lequel le processeur hôte (300) dans chaque passerelle (200) comprend un moyen pour communiquer avec le trafic de communication au format Ethernet et dans lequel les DSP comprennent un moyen pour communiquer avec le trafic de communication PCM, dans lequel le processeur hôte (300) comprend un moyen pour communiquer avec les DSP et pour traduire le trafic de communication entre le format Ethernet (P₁, P₂) et le format E1 ou T1 PCM (Q₁, Q₂, Q₃, Q₄) par la passerelle.

23. Système de communication selon la revendication 21 ou 22 dans lequel la matrice (330) de chaque passerelle comprend les DSP groupés en lignes, dans lequel chaque ligne est câblée vers un port de trafic de communication PCM respectif (Q₁, Q₂, Q₃, Q₄) de la passerelle.

24. Système de communication selon l'une quelconque des revendications 21 à 23 dans lequel chaque processeur hôte (300) est connecté à un moyen de mémoire correspondant (310), dans lequel le moyen de mémoire correspondant comprend une première partie pour stocker la première version du logiciel et une deuxième partie pour stocker la seconde version du logiciel de façon à ce que la première partie ne soit pas écrasée lorsque la seconde version du logiciel est chargée dans le moyen de mémoire.

25. Système de communication selon la revendication 24 dans lequel le moyen de mémoire correspondant comprend une troisième partie pour stocker les données rémanentes de façon à ce que la troisième partie ne soit pas écrasée lorsque les première et seconde versions du logiciel sont chargées dans le moyen de mémoire (310).

26. Système de communication selon l'une quelconque des revendications 18 à 25 dans lequel le moyen de connexion (130) comprend un moyen de balisage (Fₛ) et une mémoire non volatile pour stocker le logiciel de base dans lequel le logiciel de base est utilisé pour définir le moyen de balisage (Fₛ) afin d'indiquer à la seconde version du logiciel si l'appel a lieu après une coupure d'alimentation vers le système (100) ou lors de l'exécution d'une commutation en ligne du logiciel dans le système (100).
